# EUROPÄISCHE PATENTSCHRIFT

(11) **EP 2 566 755 B1**
(45) Veröffentlichungstag und Bekanntmachung des Hinweises auf die Patenterteilung: **19.04.2017**
(21) Anmeldenummer: 11722998.9
(22) Anmeldetag: 06.05.2011
(51) Int. Cl.: B64D 11/00

(54) **SITZANBAUVORRICHTUNG**
SEAT ADD-ON DEVICE
DISPOSITIF POUR MONTER UN ÉLÉMENT SUR UN SIÈGE

(30) Priorität: 07.05.2010 DE 102010019849
(43) Veröffentlichungstag der Anmeldung: 13.03.2013
(73) Patentinhaber: Recaro Aircraft Seating GmbH & Co. KG, 74523 Schwäbisch Hall (DE)
(72) Erfinder: HÄUSSER, Markus, 74374 Zaberfeld (DE)
(74) Vertreter: Daub, Thomas
(86) Internationale Anmeldenummer: PCT/EP2011/002260
(87) Internationale Veröffentlichungsnummer: WO 2011/138043

(56) Entgegenhaltungen:
- WO-A1-2005/061322
- US-A- 5 583 735
- US-A1- 2005 002 155

## Beschreibung

### Stand der Technik

Die Erfindung geht aus von einer Sitzanbauvorrichtung nach dem Oberbegriff des Patentanspruchs 1.

Es ist bereits eine Sitzanbauvorrichtung, insbesondere eine Fluggastsitzanbauvorrichtung, zur beweglichen Befestigung eines Gegenstands an einem Sitz, mit einem Tragarm und zumindest einer mechanischen Energiespeichereinheit, die dazu vorgesehen ist, in einem gespannten Zustand eine Kraft zu speichern, die zur Bewegung des Tragarms von einer Verstaustellung in eine Entriegelungsstellung vorgesehen ist, bekannt. Dokument WO2005/061322 offenbart eine solche Sitzanbauvorrichtung.

Der Erfindung liegt die Aufgabe zugrunde, einen Bedienkomfort der Sitzanbauvorrichtung zu erhöhen.

Diese Aufgabe ist durch eine Sitzanbauvorrichtung gemäß dem Patentanspruch 1 gelöst. Weitere vorteilhafte Ausführungen der Erfindung können den Unteransprüchen entnommen werden.

### Vorteile der Erfindung

Erfindungsgemäß wird eine Sitzanbauvorrichtung, insbesondere eine Fluggastsitzanbauvorrichtung, zur beweglichen Befestigung eines Gegenstands an einem Sitz, mit einem Tragarm und zumindest einer mechanischen Energiespeichereinheit, die dazu vorgesehen ist, in einem gespannten Zustand eine Kraft zu speichern, die zur Bewegung des Tragarms von einer Verstaustellung in eine Entriegelungsstellung vorgesehen ist, sowie mit zumindest einer Fixiereinheit, die dazu vorgesehen ist, die Energiespeichereinheit unabhängig von dem Tragarm in dem gespannten Zustand zu halten, vorgeschlagen. Dadurch kann die in der Energiespeichereinheit gespeicherte Kraft von dem Tragarm abgekoppelt werden. Durch die Abkopplung der zur selbstständigen Bewegung des Tragarms von der Verstaustellung in die Entriegelungsstellung vorgesehenen Kraft kann eine Kraft zum Halten des Tragarms in der Verstaustellung reduziert werden, wodurch eine zum Lösen des Tragarms aus der Verstaustellung notwendige Kraft eines Benutzers reduziert werden kann. Durch die Reduzierung der zum Lösen des Tragarms notwendigen Kraft kann ein Bedienkomfort der Sitzanbauvorrichtung erhöht werden. Unter einem "gespannten Zustand" soll insbesondere ein Zustand verstanden werden, der sich bei einem Krafteinfluss auf die Energiespeichereinheit ausgehend von einem entspannten Zustand einstellt. Unter einem "entspannten Zustand" soll insbesondere ein Zustand verstanden werden, der sich bei fehlendem Krafteinfluss auf die Energiespeichereinheit einstellt. Vorzugsweise wird durch ein Halten des gespannten Zustands der Krafteinfluss aufrechterhalten. Vorteilhafterweise ist die in der Energiespeichereinheit gespeicherte Kraft als eine lineare Kraft ausgebildet. Unter "unabhängig" soll insbesondere verstanden werden, dass der gespannte Zustand der Energiespeichereinheit direkt gehalten wird. Vorteilhafterweise ist die in der Energiespeichereinheit gespeicherte Kraft von dem Tragarm entkoppelt. Vorzugsweise wird der gespannte Zustand beim unabhängigen Halten von einem Bauteil gehalten, das sich von dem Tragarm unterscheidet und keine Anbindung an den Tragarm aufweist. Bei einem von dem Tragarm unabhängigen Halten des gespannten Zustands stützt sich die Energiespeichereinheit vorzugsweise nicht an dem Tragarm ab. Unter "direkt" soll insbesondere verstanden werden, dass ein Kraftfluss unmittelbar an ein ortsfestes Bauteil übertragen wird. Vorzugsweise verhindert das direkte Halten ein Übertragen des Kraftflusses über den Tragarm an das ortsfeste Bauteil.

Unter einem "Gegenstand" soll in diesem Zusammenhang insbesondere ein Monitor verstanden werden. Der Tragarm ist vorzugsweise als ein Videotragarm ausgebildet. Unter einer "Verstaustellung" soll insbesondere eine Position des Tragarms verstanden werden, in der die Sitzanbauvorrichtung in einem unbenutzten Zustand aufbewahrt wird. Die Sitzanbauvorrichtung ist in der Verstaustellung vorzugsweise für einen Benutzer nicht störend angeordnet. Unter einer "Energiespeichereinheit" soll insbesondere eine Einheit verstanden werden, die eine durch Bewegen des Tragarms aufgebrachte Kraft aufnimmt und/oder speichert. Unter einer "Entriegelungsstellung" soll insbesondere eine Position des Tragarms verstanden werden, die durch die in der Energiespeichereinheit gespeicherte Kraft selbständig eingestellt wird. Vorzugsweise kann der Benutzer, ausgehend von der Entriegelungsstellung, eine Nutzstellung des Tragarms einstellen. Unter einer "Nutzstellung" soll insbesondere eine Position des Tragarms verstanden werden, in der der Benutzer den Gegenstand nutzt. Die Nutzstellung ist vorzugsweise eine, in einem Teilschwenkbereich von dem Benutzer einstellbare, variable Position des Tragarms. Erfindungsgemäß weist die Energiespeichereinheit zumindest ein Betätigungselement und die Fixiereinheit ein ortsfest angeordnetes Gehäuse auf und ist dazu vorgesehen, das Betätigungselement direkt mit dem Gehäuse zu verbinden. Dadurch kann besonders einfach der gespannte Zustand unabhängig von dem Tragarm gehalten werden.

In einer vorteilhaften Ausgestaltung ist die Fixiereinheit dazu vorgesehen, den Tragarm in der Verstaustellung zu fixieren. Dadurch kann eine sichere Einstellung der Verstaustellung realisiert werden.

Weiter wird vorgeschlagen, dass der Tragarm in der Verstaustellung in Bezug auf die in der Energiespeichereinheit gespeicherte Kraft kraftlos ist. Dadurch kann ein Halten der Verstaustellung des Tragarms besonders einfach realisiert werden. Erfindungsgemäß weist die Fixiereinheit zumindest ein Rastelement auf, das dazu vorgesehen ist, zumindest das Betätigungselement der Energiespeichereinheit direkt zu verrasten. Dadurch kann ein unabhängiges Halten konstruktiv einfach realisiert werden. Unter einem "Rastelement" soll insbesondere ein Element verstanden werden, das an ein ortsfestes Bauteil angebunden ist. Das Rastelement leitet einen Kraftfluss direkt an das ortsfeste Bauteil. Das ortsfeste Bauteil ist als das ortsfest angeordnete Gehäuse der Fixiereinheit ausgebildet. Die Fixiereinheit ist vorzugsweise als eine Rasteinheit ausgebildet. Erfindungsgemäß weist die Fixiereinheit zumindest ein weiteres Rastelement auf, das dazu vorgesehen ist, den Tragarm direkt zu verrasten. Dadurch kann besonders einfach eine sichere Einstellung der Verstaustellung des Tragarms realisiert werden. Erfindungsgemäß weist die Fixiereinheit eine Rastauslöseeinheit auf, die dazu vorgesehen ist, die Rastelemente zeitlich nacheinander zu lösen. Dadurch kann eine besonders vorteilhafte Einstellung der Verstaustellung realisiert werden. Unter einem "Lösen der Rastelemente" soll insbesondere eine Aufhebung von, durch die Rastelemente hergestellten Verrastungen verstanden werden. Vorzugsweise löst die Fixiereinheit zuerst das zumindest eine Rastelement, das die Verrastung des Tragarms herstellt. Erfindungsgemäß weist die Rastauslöseeinheit zumindest ein Kopplungselement auf, das dazu vorgesehen ist, die zumindest zwei Rastelemente bewegungstechnisch miteinander zu koppeln. Dadurch kann konstruktiv einfach eine zeitlich nacheinander folgende Lösung der Rastelemente erreicht werden. Vorzugsweise wird durch die bewegungstechnische Kopplung der Rastelemente ein Lösen der Verrastung des Tragarms und der Energiespeichereinheit bewegungstechnisch gekoppelt.

In einer weiteren erfindungsgemäßen Ausgestaltung wird vorgeschlagen, dass die Energiespeichereinheit zumindest ein lineares Federelement aufweist, das dazu vorgesehen ist, eine translatorische Kraft zu speichern. Dadurch kann eine besonders vorteilhafte Energiespeichereinheit realisiert werden.

Insbesondere ist es vorteilhaft, wenn die Sitzanbauvorrichtung zumindest eine Kraftumsetzungseinheit aufweist, die dazu vorgesehen ist, zumindest das Betätigungselement der Energiespeichereinheit mit zumindest einem Teil des Tragarms bewegungstechnisch miteinander zu koppeln. Dadurch kann die in der Energiespeichereinheit gespeicherte Kraft besonders einfach auf den Tragarm übertragen werden. Die Kraftumsetzungseinheit ist vorzugsweise als eine mechanische Kraftumsetzungseinheit ausgebildet.

Ebenfalls ist es vorteilhaft, wenn die Kraftumsetzungseinheit dazu vorgesehen ist, die in der Energiespeichereinheit gespeicherte Kraft in ein Drehmoment zur Betätigung des Tragarms umzuwandeln. Dadurch kann besonders einfach der Tragarm von der Verstaustellung in die Entriegelungsstellung bewegt werden.

In einer weiteren erfindungsgemäßen Ausgestaltung weist die Kraftumsetzungseinheit zumindest ein Umlenkgetriebe auf, das in zumindest einem Betriebszustand dazu vorgesehen ist, den Tragarm mit dem Rastelement formschlüssig zu verbinden. Dadurch kann eine Anzahl der Rastelemente reduziert werden. Unter einem "Umlenkgetriebe" soll insbesondere eine Einheit verstanden werden, die eine Kraft bzw. eine Bewegung ändert. Vorzugsweise überträgt das Umlenkgetriebe eine Kraft von dem Tragarm auf das Betätigungselement und eine Kraft von dem Betätigungselement auf den Tragarm. Vorteilhafterweise entkoppelt das Umlenkgetriebe in zumindest einem Betriebszustand den Tragarm von dem Betätigungselement der Energiespeichereinheit.

Weiter wird vorgeschlagen, dass die Kraftumsetzungseinheit als ein Zahnstangengetriebe ausgebildet ist. Dadurch kann eine besonders vorteilhafte Kraftumsetzungseinheit bereitgestellt werden. Unter einem "Zahnstangengetriebe" soll insbesondere eine Einheit verstanden werden, die zumindest ein Zahnstangenelement und zumindest ein Zahnradelement aufweist, mittels denen die Einheit eine Drehbewegung in eine lineare Bewegung oder umgekehrt umwandelt. Vorzugsweise weisen das Zahnstangenelement und das Zahnradelement eine Reihe von Erhebungen bzw. Zähnen auf, die korrespondierend ausgebildet sind. Vorteilhafterweise greifen die Erhebungen des Zahnstangenelements und die Erhebungen des Zahnradelements ineinander.

Außerdem wird vorgeschlagen, dass die Sitzanbauvorrichtung eine Auslöseeinheit aufweist, die dazu vorgesehen ist, zum gemeinsamen Lösen der Fixierung des Tragarms und der Fixierung der Energiespeichereinheit die Fixiereinheit zu betätigen. Dadurch kann besonders vorteilhaft die Fixierung des Tragarms und der Energiespeichereinheit gelöst werden. Die Auslöseeinheit ist vorteilhafterweise als eine mechanische Auslöseeinheit ausgebildet.

### Zeichnung

Weitere Vorteile ergeben sich aus der folgenden Zeichnungsbeschreibung. In den Zeichnungen sind zwei Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: einen schematisch dargestellten Sitz mit einer Armlehne und eine an die Armlehne angebundene Sitzanbauvorrichtung,
- Fig. 2: die Sitzanbauvorrichtung in einer Nutzstellung mit einem Montagemodul,
- Fig. 3: eine Schnittdarstellung des Montagemoduls und einer Hauptgelenkeinheit,
- Fig. 4: eine schematisch dargestellte, alternativ ausgebildete Sitzanbauvorrichtung in einer Verstaustellung und eine Armlehne und
- Fig. 5: eine Schnittdarstellung einer Hauptgelenkeinheit der alternativ ausgebildeten Sitzanbauvorrichtung.

### Beschreibung des Ausführungsbeispiels

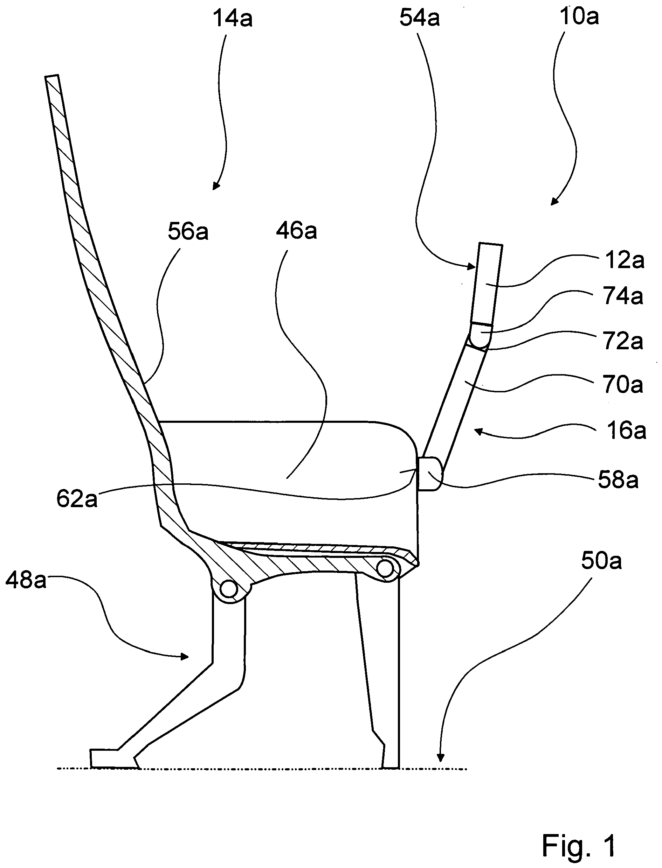

Die Figuren 1 bis 3 zeigen einen Sitz 14a mit einer erfindungsgemäßen Sitzanbauvorrichtung 10a. Die Sitzanbauvorrichtung 10a ist als eine Fluggastsitzanbauvorrichtung ausgebildet. Die Sitzanbauvorrichtung 10a befestigt einen als Monitor ausgebildeten Gegenstand 12a beweglich an dem Sitz 14a. Der Sitz 14a umfasst dabei eine Armlehne 46a, an die die Sitzanbauvorrichtung 10a angebunden ist. Der Sitz 14a weist Sitzfüße 48a auf, mittels denen der Sitz 14a an einem Boden 50a eines Flugzeugs befestigt ist. Der Sitz 14a ist als ein Fluggastsitz ausgebildet. Die Armlehne 46a ist als eine Armlehnenkonsole ausgebildet. Der als Monitor ausgebildete Gegenstand 12a ist lediglich in der Figur 1 dargestellt.

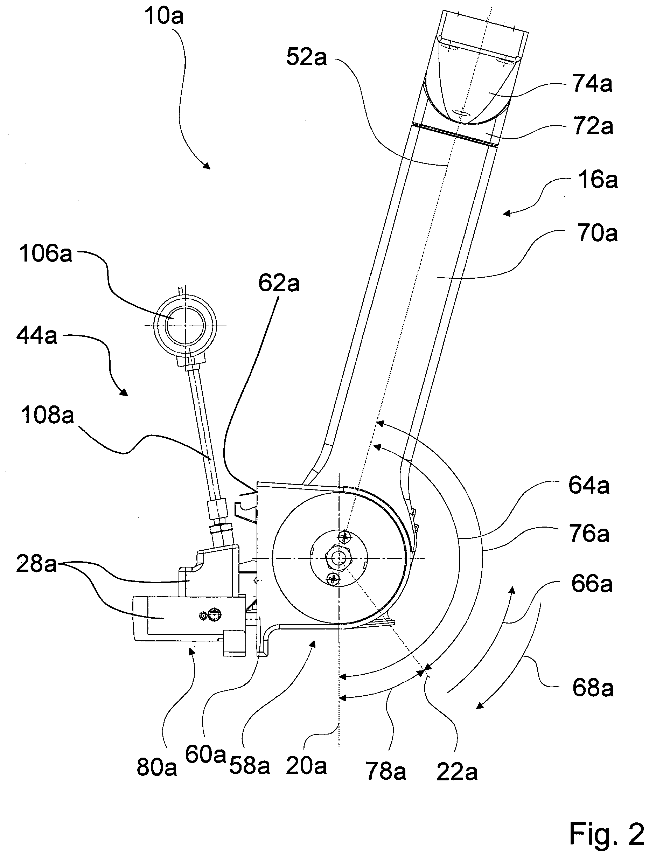

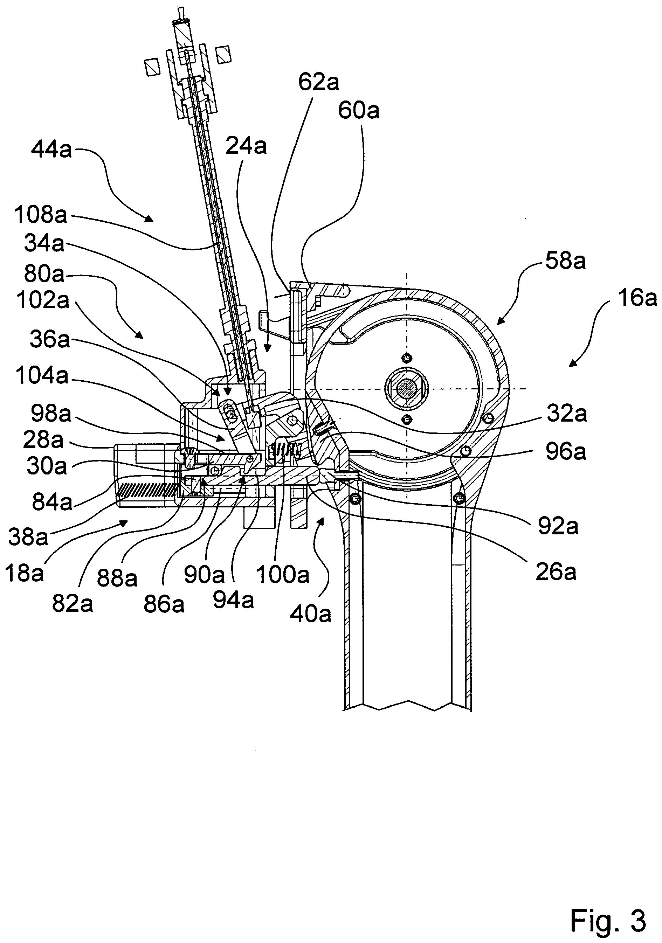

In einer Nutzstellung 52a der Sitzanbauvorrichtung 10a (vgl. Figuren 1 und 2) kann der Gegenstand 12a von einem Benutzer, der in dem Sitz 14a sitzt, genutzt werden. In der Nutzstellung 52a zeigt eine Bildschirmebene 54a des als Monitor ausgebildeten Gegenstands 12a in Richtung einer Rückenlehne 56a des Sitzes 14a. Der auf dem Sitz 14a sitzende Benutzer hat somit den als Monitor ausgebildeten Gegenstand 12a vor sich angeordnet. In einer Verstaustellung 20a der Sitzanbauvorrichtung 10a (vgl. Figur 3) kann der Gegenstand 12a von dem Benutzer, der in dem Sitz 14a sitzt, nicht genutzt werden. In der Verstaustellung 20a ist der als Monitor ausgebildete Gegenstand 12a im Bereich der Sitzfüße 48a unterhalb der Armlehne 46a des Sitzes 14a angeordnet.

Die Sitzanbauvorrichtung 10a umfasst einen Tragarm 16a und eine Hauptgelenkeinheit 58a. Die Hauptgelenkeinheit 58a weist ein ortsfest angeordnetes Hauptgelenkgehäuse 60a auf. Das Hauptgelenkgehäuse 60a ist mit einer Befestigungsfläche 62a fest mit der Armlehne 46a verbunden. Die Hauptgelenkeinheit 58a weist ein Drehgelenk auf. Das Drehgelenk weist eine als eine Drehachse ausgebildete Hauptgelenkachse auf. Die Hauptgelenkachse zeigt in den Figuren 1 bis 3 senkrecht aus der Blattebene bzw. in die Blattebene. Die Hauptgelenkeinheit 58a führt den Tragarm 16a relativ zum Sitz 14a entlang eines Schwenkbereichs 64a. Der Schwenkbereich 64a bildet einen Winkelbereich aus, in dem der Tragarm 16a verschwenkbar ist. Mittels der Hauptgelenkeinheit 58a kann der Tragarm 16a in eine Bewegungsrichtung 66a und eine Bewegungsrichtung 68a bewegt werden. Durch die Bewegung des Tragarms 16a in Bewegungsrichtung 66a wird, ausgehend von der Verstaustellung 20a, die Nutzstellung 52a eingestellt. Durch die Bewegung des Tragarms 16a in Bewegungsrichtung 68a wird, ausgehend von der Nutzstellung 52a, die Verstaustellung 20a eingestellt. Die Verstaustellung 20a des Tragarms 16a definiert einen Schwenkwinkel des Tragarms 16a von null. Die maximale Nutzstellung definiert einen maximalen Schwenkwinkel des Tragarms 16a. In diesem Aüsführungsbeispiel ist der maximale Schwenkwinkel 165 Grad. Der Schwenkbereich 64a des Tragarms 16a in diesem Ausführungsbeispiel ist somit 165 Grad.

Der Tragarm 16a ist dreiteilig ausgebildet. Der Tragarm 16a weist ein Tragarmstück 70a, ein Zwischenstück 72a und ein Geräteaufnahmestück 74a auf. In Figur 2 zeigt das Geräteaufnahmestück 74a aus der Blattebene. Der als Monitor ausgebildete Gegenstand 12a ist auf dem Geräteaufnahmestück 74a montiert. Das Zwischenstück 72a verbindet das Tragarmstück 70a mit dem Geräteaufnahmestück 74a. Weiter umfasst der Tragarm 16a zwei Gelenke. Das erste Gelenk ist zwischen dem Tragarmstück 70a und dem Zwischenstück 72a angeordnet. Das zweite Gelenk ist zwischen dem Zwischenstück 72a und dem Geräteaufnahmestück 74a angeordnet.

Zur Beaufschlagung der Hauptgelenkeinheit 58a mit einer Reibkraft zur Fixierung des Tragarms 16a in der Nutzstellung 52a weist die Sitzanbauvorrichtung 10a eine Reibeinheit auf. Zur Bereitstellung der Reibkraft weist die Reibeinheit einen Bremsbelag und eine Bremsscheibe auf.

Zur Veränderung der zur Fixierung des Tragarms 16a vorgesehenen Reibkraft in Abhängigkeit von dem Schwenkwinkel weist die Reibeinheit ein Einstellelement auf. Das Einstellelement ist einstückig mit der Reibeinheit ausgebildet. Das Einstellelement ist als eine Oberflächenkontur der Bremsscheibe und des Bremsbelags ausgebildet. Die Bremsscheibe und der Bremsbelag liegen dabei mit ihrer Oberflächenkontur aufeinander. Die aufeinander liegenden Oberflächenkonturen bilden das Einstellelement aus. Durch die aufeinander liegenden Oberflächenkonturen unterscheidet sich eine Betätigungskraft des Bremsbelags und der Bremsscheibe und damit die Reibkraft entlang des Schwenkbereichs.

Das Einstellelement stellt entlang des Schwenkbereichs 64a einen reibungsbehafteten Teilschwenkbereich 76a und einen im Wesentlichen reibungsfreien Teilschwenkbereich 78a ein. In dem im Wesentlichen reibungsfreien Teilschwenkbereich 78a stellt das Einstellelement eine Reibkraft der Reibeinheit von nahezu null ein. Das Einstellelement entkoppelt in dem im Wesentlichen reibungsfreien Teilschwenkbereich 78a die Reibeinheit im Wesentlichen von einer Bewegung des Tragarms 16a.

Der reibungsbehaftete Teilschwenkbereich 76a erstreckt sich bei der Bewegung des Tragarms 16a in die Bewegungsrichtung 68a von der Nutzstellung 52a des Tragarms 16a bis zu einer Entriegelungsstellung 22a des Tragarms 16a. Bei der Bewegung des Tragarms 16a in die Bewegungsrichtung 68a ist der reibungsbehaftete Teilschwenkbereich 76a als ein an die Nutzstellung 52a anschließender oberer Teilschwenkbereich ausgebildet. Der im Wesentlichen reibungsfreie Teilschwenkbereich 78a erstreckt sich bei der Bewegung des Tragarms 16a in die Bewegungsrichtung 66a von der Verstaustellung 20a des Tragarms 16a bis zu der Entriegelungsstellung 22a des Tragarms 16a. Bei der Bewegung des Tragarms 16a in die Bewegungsrichtung 66a ist der im Wesentlichen reibungsfreie Teilschwenkbereich 78a als ein an die Verstaustellung 20a anschließender unterer Teilschwenkbereich ausgebildet.

Die Sitzanbauvorrichtung 10a weist weiter ein Montagemodul 80a auf. Das Montagemodul 80a umfasst teilweise eine Fixiereinheit 24a, eine mechanische Energiespeichereinheit 18a, eine Auslöseeinheit 44a und eine Kraftumsetzungseinheit 40a. Die Fixiereinheit 24a, die Energiespeichereinheit 18a, die Auslöseeinheit 44a und die Kraftumsetzungseinheit 40a sind in einem Gehäuse 28a des Montagemoduls 80a angeordnet. Das Gehäuse 28a des Montagemoduls 80a bildet ein einstückiges Gehäuse für die Fixiereinheit 24a, für die Energiespeichereinheit 18a, für die Auslöseeinheit 44a und für die Kraftumsetzungseinheit 40a aus. Das Gehäuse 28a ist ortsfest angeordnet. Das Gehäuse 28a ist mit der Armlehne 46a befestigt. Das Gehäuse 28a ist bei montierter Sitzanbauvorrichtung 10a in der Armlehne 46a angeordnet.

Die mechanische Energiespeichereinheit 18a speichert in einem gespannten Zustand eine Kraft. Die von der Energiespeichereinheit 18a gespeicherte Kraft bewegt den Tragarm 16a selbstständig von der Verstaustellung 20a in die Entriegelungsstellung 22a. Sie bewegt den Tragarm 16a entlang dem im Wesentlichen reibungsfreien Teilschwenkbereich 78a in die Bewegungsrichtung 66a.

Die Energiespeichereinheit 18a weist zwei lineare Federelemente 38a, ein Betätigungselement 26a und ein Führungselement 82a auf. Das Betätigungselement 26a und das Führungselement 82a sind formschlüssig mit einer Schraube 84a verbunden. Die Federelemente 38a speichern eine Kraft, die von dem Tragarm 16a bei der Bewegung in die Bewegungsrichtung 68a ausgeübt wird. Die Federelemente 38a sind zwischen dem Führungselement 82a bzw. dem Betätigungselement 26a und dem Gehäuse 28a angeordnet. Die Federelemente 38a sind axial hinter dem Führungselement 82a angeordnet. Die Federelemente 38a sind jeweils als eine Spiralfeder ausgebildet. Zur Führung des Führungselements 82a weist die Energiespeichereinheit 18a zwei Führungsschienen 86a auf. Das Führungselement 82a und damit das Betätigungselement 26a kann entlang den Führungsschienen 86a bewegt werden. Die linearen Federelemente 38a speichern eine translatorische bzw. lineare Kraft. Das Führungselement 82a ist als ein Führungsschlitten ausgebildet. Das Betätigungselement 26a ragt aus dem Gehäuse 28a heraus und greift bei montiertem Montagemodul 80a an dem Tragarm 16a an. Das Betätigungselement 26a ist als ein Zylinder mit zwei Ausnehmungen 88a, 90a ausgebildet. Die erste Ausnehmung 88a weist eine Schrägfläche auf. Ein Ende des Betätigungselements 26a mit der ersten Ausnehmung 88a greift teilweise in das Führungselement 82a. Das Ende des Betätigungselements 26a mit der ersten Ausnehmung 88a ist mit der Schraube 84a mit dem Führungselement 82a verbunden. Ein anderes Ende des Betätigungselements 26a liegt in der Verstaustellung 20a und der Entriegelungsstellung 22a des Tragarms 16a an einem Tragarmbetätigungselement 92a.

Die Kraftumsetzungseinheit 40a wandelt die in der Energiespeichereinheit 18a gespeicherte translatorische Kraft in ein Drehmoment zur Betätigung des Tragarms 16a um. Die Kraftumsetzungseinheit 40a koppelt bewegungstechnisch das Betätigungselement 26a der Energiespeichereinheit 18a mit dem Tragarm 16a. Die Kraftumsetzungseinheit 40a umfasst in diesem Ausführungsbeispiel lediglich das Tragarmbetätigungselement 92a. Das Tragarmbetätigungselement 92a ist als ein Bolzen ausgebildet. Das Tragarmbetätigungselement 92a ist fest mit dem Tragarm 16a verbunden. Das Tragarmbetätigungselement 92a greift versetzt zu der Hauptgelenkachse an dem Tragarm 16a an. Wird das Tragarmbetätigungselement 92a durch das Betätigungselement 26a der Energiespeichereinheit 18a mit der translatorischen Kraft beaufschlagt, verursacht es das auf den Tragarm 16a wirkende Drehmoment.

Um die Energiespeichereinheit 18a unabhängig von dem Tragarm 16a in dem gespannten Zustand zu halten, weist die Sitzanbauvorrichtung 10a die Fixiereinheit 24a auf. Sie fixiert zeitgleich den Tragarm 16a und das Betätigungselement 26a der Energiespeichereinheit 18a formschlüssig. Die Fixiereinheit 24a verbindet das Betätigungselement 26a direkt mit ihrem ortsfest angeordneten Gehäuse. Das Gehäuse der Fixiereinheit ist einstückig mit dem Gehäuse 28a ausgebildet. Die Fixiereinheit 24a fixiert den Tragarm 16a und das Betätigungselement 26a in der Verstaustellung 20a. Der Tragarm 16a ist in der Verstaustellung 20a bezüglich der in der Energiespeichereinheit 18a gespeicherten Kraft kraftlos.

Die Fixiereinheit 24a umfasst vier Rastelemente 30a, 94a, 32a, 96a. Die Rastelemente 30a, 32a sind als zwei getrennte Rasteingriffselemente und die Rastelemente 94a, 96a als zwei getrennte Rastaufnahmeelemente ausgebildet. Die als Rasteingriffselemente ausgebildeten Rastelemente 30a, 32a stellen jeweils eine Haltekraft bereit. Die Rastelemente 30a, 32a sind als haltende Elemente ausgebildet. Die Rastelemente 30a, 32a sind ortsfest gegen das Gehäuse 28a abgestützt. Die als Rastaufnahmeelemente ausgebildeten Rastelemente 94a, 96a werden durch die Haltekraft gehalten. Die Rastelemente 94a, 96a sind als gehaltene Elemente ausgebildet. Das Rastelement 94a ist als die Ausnehmung 90a des Betätigungselements 26a ausgebildet. Das Rastelement 96a ist fest mit dem Tragarm 16a verbunden. Das Rastelement 30a greift in das Rastelement 94a und das Rastelement 32a in das Rastelement 96a ein, wodurch die Fixiereinheit 24a eine formschlüssige Verbindung herstellt.

Das Rastelement 30a der Fixiereinheit 24a verrastet das Betätigungselement 26a der Energiespeichereinheit 18a. Das Rastelement verrastet die Energiespeichereinheit 18a direkt und unabhängig vom Tragarm 16a. Das Betätigungselement 26a der Energiespeichereinheit 18a wird durch das Rastelement 30a und das Rastelement 94a in der Verstaustellung 20a verrastet. Das Rastelement 30a ist bezüglich des Gehäuses 28a verdrehbar angeordnet. Das Rastelement 30a weist eine Drehachse auf. Bei montiertem Montagemodul 80a ist die Drehachse des Rastelements 30a parallel zu der Befestigungsfläche 62a des Tragarms 16a angeordnet. Zur formschlüssigen Verbindung greift das Rastelement 30a in das Rastelement 94a und hält die Kraft in der Energiespeichereinheit 18a fest. Das Rastelement 30a ist als ein Rasthaken ausgebildet. Das Rastelement 30a weist eine senkrechte Fläche und eine Schrägfläche auf. Das Rastelement 94a ist als eine Rasthakenaufnahme ausgebildet. Die Rasthakenaufnahme ist als die zweite Ausnehmung 90a des Betätigungselements 26a der Energiespeichereinheit 18a ausgebildet. In der Verstaustellung 20a liegt die senkrechte Fläche des Rastelements 30a auf einer senkrechten Fläche der zweiten Ausnehmung 90a und verrastet das Betätigungselement 26a der Energiespeichereinheit 18a. In der Entriegelungsstellung 22a des Tragarms 16a greift das Rastelement 30a mit der senkrechten Fläche und der Schrägfläche teilweise in die erste Ausnehmung 88a. Zum sicheren Greifen des Rastelements 30a in das Rastelement 94a weist die Fixiereinheit 24a ein Federelement 98a auf. Das Federelement 98a übt eine Kraft aus, die das Rastelement 30a in das Rastelement 94a drückt. Das Federelement 98a ist als eine Blattfeder ausgebildet.

Das weitere Rastelement 32a der Fixiereinheit 24a verrastet den Tragarm 16a direkt. Das Rastelement 32a und das Rastelement 96a verrasten den Tragarm 16a in der Verstaustellung 20a. Das Rastelement 32a ist bezüglich des Gehäuses 28a verdrehbar angeordnet. Das Rastelement 32a weist eine Drehachse auf. Bei montiertem Montagemodul 80a ist die Drehachse des Rastelements 32a parallel zu der Befestigungsfläche 62a des Tragarms 16a angeordnet. Das Rastelement 96a ist fest mit dem Tragarm 16a verbunden. Zur formschlüssigen Verbindung greift das Rastelement 32a in das Rastelement 96a und hält den Tragarm 16a in der Verstaustellung 20a fest. Das Rastelement 32a ragt aus dem Gehäuse 28a heraus und greift bei montiertem Montagemodul 80a an dem Tragarm 16a an. Das Rastelement 32a ist als ein doppelter Rasthaken ausgebildet. In der Verstaustellung 20a und der Entriegelungsstellung 22a greift das Betätigungselement 26a zwischen dem als doppelter Rasthaken ausgebildeten Rastelement 96a durch. Das Rastelement 96a ist als eine Rasthakenaufnahme ausgebildet. Zum sicheren Greifen des Rastelements 32a in das Rastelement 96a weist die Fixiereinheit 24a ein Federelement 100a auf. Das Federelement 100a ist als eine Spiralfeder ausgebildet. Das Federelement 100a übt eine Kraft aus, die das Rastelement 32a gegen das Rastelement 96a drückt.

Zur Realisierung einer zeitlich nacheinander folgenden Lösung der Rastelemente 30a, 32a weist die Fixiereinheit 24a eine Rastauslöseeinheit 34a auf. Die Rastauslöseeinheit 34a löst die Verrastung der Rastelemente 30a, 94a und der Rastelemente 32a, 96a zeitlich nacheinander. Die Rastauslöseeinheit 34a löst zuerst die Verrastung der Rastelemente 32a, 96a und anschließend die Verrastung der Rastelemente 30a, 94a. Zur bewegungstechnischen Kopplung der Rastelemente 30a, 32a umfasst die Rastauslöseeinheit 34a ein Kopplungselement 36a. Das Kopplungselement 36a koppelt das Lösen der Verrastung des Tragarms 16a und des Betätigungselements 26a der Energiespeichereinheit 18a aus der Verstaustellung 20a bewegungstechnisch miteinander. Das Kopplungselement 36a weist ein einfaches Ende 102a und ein doppeltes Ende 104a auf. Das Kopplungselement 36a ist stimmgabelförmig ausgebildet. Das Kopplungselement 36a weist am einfachen Ende 102a und am doppelten Ende 104a eine Ausnehmung auf. Die Ausnehmung an dem doppelten Ende 104a ist als ein kreisförmiges Loch ausgebildet. Das Kopplungselement 36a ist mit dem doppelten Ende 104a durch einen Verbindungsstift mit dem Rastelement 30a verbunden.

Um die Verrastung des Tragarms 16a und die Verrastung des Betätigungselements 26a der Energiespeichereinheit 18a zeitlich nacheinander zu lösen, ist die Ausnehmung an dem einfachen Ende 102a als ein längliches Loch ausgebildet. Das Kopplungselement 36a ist mit dem einfachen Ende 102a durch einen Verbindungsstift über die, als längliches Loch ausgebildete Ausnehmung mit dem Rastelement 32a verbunden. Durch die, als längliches Loch ausgebildete Ausnehmung weisen das Kopplungselement 36a und das Rastelement 32a eine spielbehaftete Verbindung auf.

Die Auslöseeinheit 44a betätigt die Fixiereinheit 24a, um die als Verrastung ausgebildete Fixierung des Tragarms 16a und die als Verrastung ausgebildete Fixierung der Energiespeichereinheit 18a gemeinsam zu lösen. Die Auslöseeinheit 44a löst die Bewegung des Tragarms 16a von der Verstaustellung 20a in die Entriegelungsstellung 22a aus. Die Auslöseeinheit 44a umfasst einen, aus dem Gehäuse 28a herausragenden Auslöseknopf 106a und einen Zugmechanismus, den der Benutzer durch Betätigen des Auslöseknopf 106 auslöst. Der Zugmechanismus greift mit einem, aus dem Gehäuse 28a herausragenden Stab 108a in eine Ausnehmung des Rastelements 32a ein. Durch Betätigen des Auslöseknopfs 106a zieht der Zugmechanismus das Rastelement 32a aus dem Rastelement 96a und anschließend über das Kopplungselement 36a das Rastelement 30a aus dem Rastelement 94a. Durch das in dem einfachen Ende 102a des Kopplungselements 36a vorhandene Spiel wird beim Betätigen des Auslöseknopfs 106a zuerst das Rastelement 32a und zeitlich versetzt das Rastelement 30a aus seiner Verrastung gezogen. Die Fixiereinheit 24a löst die Verrastung des Betätigungselements 26a der Energiespeichereinheit 18a erst nach dem Lösen der Verrastung des Tragarms 16a. Bei montierter Sitzanbauvorrichtung 10a mit dem Montagemodul 80a an der Armlehne 46a ragt der Auslöseknopf 106a vertikal aus der Armlehne 46a heraus. Grundsätzlich kann der Auslöseknopf 106a aber auch horizontal angeordnet werden.

In einem Bedienablauf der Sitzanbauvorrichtung 10a, in dem der Benutzer, ausgehend von der Verstaustellung 20a, die Nutzstellung 52a einstellen will, betätigt der Benutzer den Auslöseknopf 106a der Auslöseeinheit 44a. Durch Betätigen des Auslöseknopfs 106a löst die Auslöseeinheit 44a gemeinsam die Verrastung des Betätigungselements 26a der Energiespeichereinheit 18a und die Verrastung des Tragarms 16a. Dabei löst die Auslöseeinheit 44a zuerst die Verrastung des Tragarms 16a und anschließend die Verrastung des Betätigungselements 26a der Energiespeichereinheit 18a. Durch die bis dahin im gespannten Zustand gehaltene Energiespeichereinheit 18a wird nach dem Lösen der Verrastung des Betätigungselements 26a die in der Energiespeichereinheit 18a gespeicherte translatorische Kraft freigesetzt, wodurch eine lineare Bewegung des Führungselements 82a und damit des Betätigungselements 26a resultiert. Die Kraftumsetzungseinheit 40a wandelt die translatorische Kraft bzw. die lineare Bewegung der Energiespeichereinheit 18a in ein Drehmoment bzw. in eine rotatorische Bewegung des Tragarms 16a um, indem das Betätigungselement 26a der Energiespeichereinheit 18a nach dem Lösen der Verrastung des Rastelements 30a gegen das mit dem Tragarm 16a verbundene Tragarmbetätigungselement 92a drückt. Das Betätigungselement 26a der Energiespeichereinheit 18a bewegt den Tragarm 16a in die Bewegungsrichtung 66a entlang dem im Wesentlichen reibungsfreien Teilschwenkbereich 78a in die Entriegelungsstellung 22a. Die Energiespeichereinheit 18a befindet sich nun in einem entspannten bzw. in einem kraftlosen Zustand. Bei fehlender äußerer Krafteinwirkung durch den Benutzer hält die Energiespeichereinheit 18a den Tragarm 16a in der Entriegelungsstellung 22a fest. Die in der Energiespeichereinheit 18a gespeicherte Kraft wirkt also auf den Tragarm 16a erst nach dem Lösen der Verrastung des Betätigungselements 26a. Ausgehend von der Entriegelungsstellung 22a stellt der Benutzer durch Bewegen des Tragarms 16a in die Bewegungsrichtung 66a entlang dem reibungsbehafteten Teilschwenkbereich 76a die gewünschte Nutzstellung 52a ein. Die Reibeinheit hält die gewünschte Nutzstellung 52a durch eine Reibkraft fest. Durch die Gelenke verstellt der Benutzer die Nutzstellung 52a des als Monitor ausgebildeten Gegenstands 12a.

In einem Bedienablauf der Sitzanbauvorrichtung 10a, in dem der Benutzer, ausgehend von der Nutzstellung 52a, die Verstaustellung 20a einstellen will, bewegt der Benutzer den Tragarm 16a in die Bewegungsrichtung 68a entlang dem reibungsbehafteten Teilschwenkbereich 76a in die Entriegelungsstellung 22a. Die Energiespeichereinheit 18a hält bei fehlender äußerer Krafteinwirkung durch den Benutzer den Tragarm 16a in der Entriegelungsstellung 22a fest. In der Entriegelungsstellung 22a liegt das Betätigungselement 26a wieder an dem Tragarmbetätigungselement 92a an. Bis dahin befindet sich die Energiespeichereinheit 18a in dem entspannten bzw. in dem kraftlosen Zustand. Ausgehend von der Entriegelungsstellung 22a bewegt der Benutzer den Tragarm 16a in die Bewegungsrichtung 68a entlang dem im Wesentlichen reibungsfreien Teilschwenkbereich 78a in die Verstaustellung 20a. Beim Bewegen des Tragarms 16a in die Bewegungsrichtung 68a entlang dem im Wesentlichen reibungsfreien Teilschwenkbereich 78a überwindet der Benutzer lediglich die Kraft der Federelemente 38a und spannt die bis dahin entspannte Energiespeichereinheit 18a bzw. die bis dahin entspannten Federelemente 38a der Energiespeichereinheit 18a. Durch das Bewegen des Tragarms 16a in die Bewegungsrichtung 68a entlang dem im Wesentlichen reibungsfreien Teilschwenkbereich 78a wandelt die Kraftumsetzungseinheit 40a das von dem Benutzer aufgebrachte Drehmoment in eine translatorische Kraft. Diese translatorische Kraft speichert die Federelemente 38a. Diese translatorische Kraft ist die Kraft, die den Tragarm 16a beim Betätigen des Auslöseknopfs 106a in die Entriegelungsstellung 22a bewegt. Die Verstaustallung 20a ist beim Einrasten der Rastelemente 30a, 32a eingestellt. Beim Einrasten des Rastelements 30a entkoppelt das Rastelement 30a die translatorische Kraft der Energiespeichereinheit 18a von dem Tragarm 16a. Das Rastelement 30a leitet die Kraft der gespannten Energiespeichereinheit 18a auf das, mit dem ortsfesten Gehäuse 28a einstückig ausgebildete Gehäuse der Fixiereinheit 24a. Die Fixiereinheit 24a hält gleichzeitig den Tragarm 16a in der Verstaustellung 20a und den gespannten Zustand der Energiespeichereinheit 18a, wobei die durch den gespannten Zustand resultierende translatorische Kraft der Energiespeichereinheit 18a von dem Tragarm 16a entkoppelt ist bzw. getrennt ist. Der Tragarm 16a ist in einem verrasteten Zustand in Bezug auf die Kraft der Energiespeichereinheit 18a kraftlos.

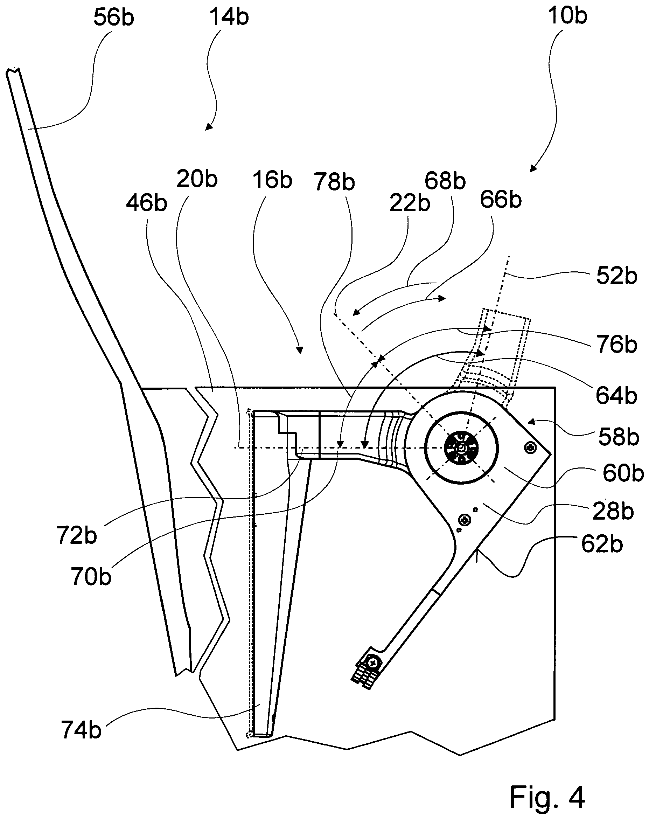

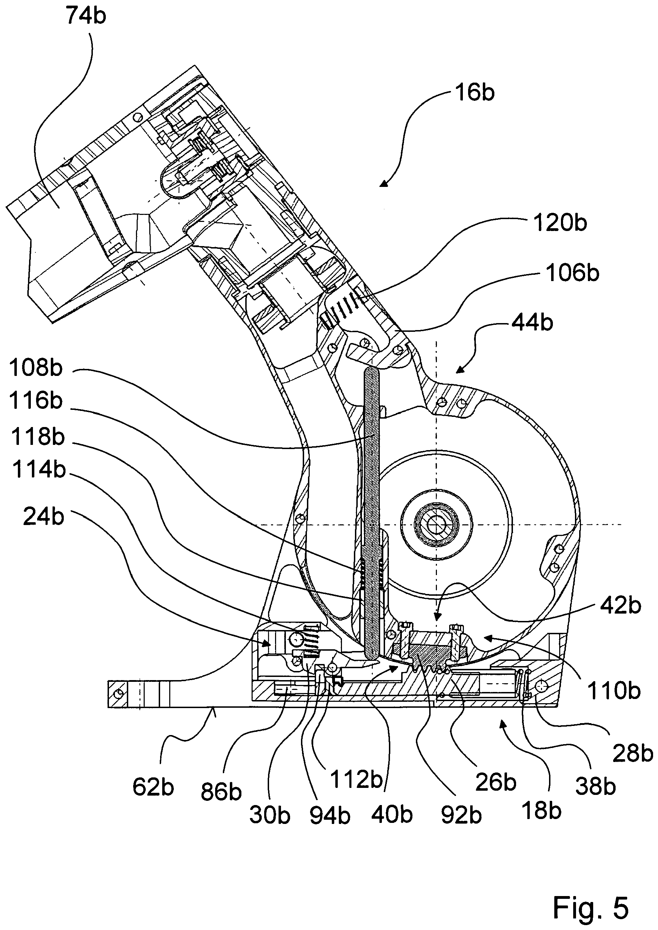

Die Figuren 4 und 5 zeigen ein zweites Ausführungsbeispiel einer Sitzanbauvorrichtung 10b. Die Sitzanbauvorrichtung 10b ist als eine Fluggastsitzanbauvorrichtung ausgebildet. Die Sitzanbauvorrichtung 10b befestigt einen, nicht näher dargestellten, als Monitor ausgebildeten Gegenstand beweglich an einem Sitz 14b. Der Sitz 14b umfasst dabei eine als Armlehnenkonsole ausgebildete Armlehne 46b, in der die Sitzanbauvorrichtung 10b angeordnet ist. Der Sitz 14b weist Sitzfüße auf, mittels denen der Sitz 14b an einem Boden eines Flugzeugs befestigt ist. Der Sitz 14b ist als ein Fluggastsitz ausgebildet.

In einer Verstaustellung 20b der Sitzanbauvorrichtung 10b (vgl. Figur 4 und 5) kann der Gegenstand von dem Benutzer, der in dem Sitz 14b sitzt, nicht genutzt werden. In der Verstaustellung 20b ist der als Monitor ausgebildete Gegenstand innerhalb der Armlehne 46b angeordnet. Die Sitzanbauvorrichtung 10b ist in der Verstaustellung 20b gänzlich in der Armlehne 46b angeordnet. In einer Nutzstellung 52b der Sitzanbauvorrichtung 10b (vgl. gestrichelt dargestellter Ausschnitt in Figur 4) kann der Gegenstand von einem Benutzer, der in dem Sitz 14b sitzt, genutzt werden. In der Nutzstellung 52b zeigt eine Bildschirmebene des als Monitor ausgebildeten Gegenstands in Richtung einer Rückenlehne 56b des Sitzes 14b. Der auf dem Sitz 14b sitzende Benutzer hat somit den als Monitor ausgebildeten Gegenstand vor sich angeordnet. Lediglich ein Tragarm 16b der Sitzanbauvorrichtung 10b ragt in der Nutzstellung 52b aus der Armlehne 46b.

Die Sitzanbauvorrichtung 10b umfasst den Tragarm 16b und eine Hauptgelenkeinheit 58b. Die Hauptgelenkeinheit 58b weist ein ortsfest angeordnetes Hauptgelenkgehäuse 60b auf. Das Hauptgelenkgehäuse 60b ist mit einer Befestigungsfläche 62b fest mit und in der Armlehne 46b verbunden. Die Hauptgelenkeinheit 58b weist ein Drehgelenk auf. Das Drehgelenk weist eine als eine Drehachse ausgebildete Hauptgelenkachse auf. Die Hauptgelenkachse zeigt in den Figuren 4 und 5 aus bzw. in eine Blattebene. Die Hauptgelenkeinheit 58b führt den Tragarm 16b relativ zum Sitz 14b entlang eines Schwenkbereichs 64b. Der Schwenkbereich 64b bildet einen Winkelbereich aus, in dem der Tragarm 16b verschwenkbar ist. Mittels der Hauptgelenkeinheit 58b kann der Tragarm 16b in eine Bewegungsrichtung 66b und eine Bewegungsrichtung 68b bewegt werden. Durch die Bewegung des Tragarms 16b in Bewegungsrichtung 66b wird, ausgehend von der Verstaustellung 20b, die Nutzstellung 52b eingestellt. Durch die Bewegung des Tragarms 16b in Bewegungsrichtung 68b wird, ausgehend von der Nutzstellung 52b, die Verstaustellung 20b eingestellt. Die Verstaustellung 20b des Tragarms 16b definiert einen Schwenkwinkel des Tragarms 16b von null. Die maximale Nutzstellung definiert einen maximalen Schwenkwinkel des Tragarms 16b. In diesem Ausführungsbeispiel ist der maximale Schwenkwinkel 103 Grad. Der Schwenkbereich 64b des Tragarms 16b in diesem Ausführungsbeispiel ist somit 103 Grad.

Der Tragarm 16b ist dreiteilig ausgebildet. Der Tragarm 16b weist ein Tragarmstück 70b, ein Zwischenstück 72b und ein Geräteaufnahmestück 74b auf. Der als Monitor ausgebildete Gegenstand ist auf dem Geräteaufnahmestück 74b montiert. Weiter umfasst der Tragarm 16b zwei Gelenke. Das erste Gelenk ist zwischen dem Tragarmstück 70b und dem Zwischenstück 72b angeordnet. Das zweite Gelenk ist zwischen dem Zwischenstück 72b und dem Geräteaufnahmestück 74b angeordnet. Das erste Gelenk und das zweite Gelenk sind als Drehgelenke ausgebildet.

Das Tragarmstück 70b ist fest mit einem Teil der Hauptgelenkeinheit 58b verbunden. Über die Hauptgelenkeinheit 58b ist das Tragarmstück 70b beweglich in der Armlehne 46b angebunden. Das Tragarmstück 70b weist eine Haupterstreckungsrichtung auf, die in der Nutzstellung 52b in einer Blickrichtung des im Sitz 14b sitzenden Benutzers senkrecht zu der Hauptgelenkachse der Hauptgelenkeinheit 58b ausgerichtet ist.

Zur Beaufschlagung der Hauptgelenkeinheit 58b mit einer Reibkraft zur Fixierung des Tragarms 16b in der Nutzstellung 52b weist die Sitzanbauvorrichtung 10b eine Reibeinheit auf. Zur Bereitstellung der Reibkraft weist die Reibeinheit einen Bremsbelag und eine Bremsscheibe auf.

Zur Veränderung der zur Fixierung des Tragarms 16b vorgesehenen Reibkraft in Abhängigkeit von dem Schwenkwinkel weist die Reibeinheit ein Einstellelement auf. Das Einstellelement ist einstückig mit der Reibeinheit ausgebildet. Das Einstellelement ist als eine Oberflächenkontur der Bremsscheibe und des Bremsbelags ausgebildet. Die Bremsscheibe und der Bremsbelag liegen dabei mit ihrer Oberflächenkontur aufeinander. Die aufeinander liegenden Oberflächenkonturen bildet das Einstellelement aus. Durch die aufeinander liegenden Oberflächenkonturen unterscheiden sich eine Betätigungskraft des Bremsbelags und der Bremsscheibe und damit die Reibkraft entlang des Schwenkbereichs 64b.

Das Einstellelement stellt entlang des Schwenkbereichs 64b einen reibungsbehafteten Teilschwenkbereich 76b und einen im Wesentlichen reibungsfreien Teilschwenkbereich 78b ein. In dem im Wesentlichen reibungsfreien Teilschwenkbereich 78b stellt das Einstellelement eine Reibkraft der Reibeinheit von nahezu null ein. Das Einstellelement entkoppelt in dem im Wesentlichen reibungsfreien Teilschwenkbereich 78b die Reibeinheit im Wesentlichen von einer Bewegung des Tragarms 16b.

Der reibungsbehaftete Teilschwenkbereich 76b erstreckt sich bei der Bewegung des Tragarms 16b in die Bewegungsrichtung 68b von der Nutzstellung 52b des Tragarms 16b bis zu einer Entriegelungsstellung 22b des Tragarms 16b. Bei der Bewegung des Tragarms 16b in die Bewegungsrichtung 68b ist der reibungsbehaftete Teilschwenkbereich 76b als ein an die Nutzstellung 52b anschließender oberer Teilschwenkbereich ausgebildet. Der im Wesentlichen reibungsfreie Teilschwenkbereich 78b erstreckt sich bei der Bewegung des Tragarms 16b in die Bewegungsrichtung 66b von der Verstaustellung 20b des Tragarms 16b bis zu der Entriegelungsstellung 22b des Tragarms 16b. Bei der Bewegung des Tragarms 16b in die Bewegungsrichtung 66b ist der im Wesentlichen reibungsfreie Teilschwenkbereich 78b als ein an die Verstaustellung 20b anschließender unterer Teilschwenkbereich ausgebildet.

Zum selbstständigen Bewegen des Tragarms 16b von der Verstaustellung 20b in die Entriegelungsstellung 22b weist die Sitzanbauvorrichtung 10b eine mechanische Energiespeichereinheit 18b auf. Die mechanische Energiespeichereinheit 18b speichert in einem gespannten Zustand eine Kraft, die den Tragarm 16b von der Verstaustellung 20b in die Entriegelungsstellung 22b bewegt. Die Energiespeichereinheit 18b bewegt selbstständig den Tragarm 16b entlang dem im Wesentlichen reibungsfreien Teilschwenkbereich 78b in die Bewegungsrichtung 66b.

Die Energiespeichereinheit 18b weist ein lineares Federelement 38b und ein Betätigungselement 26b auf. Das lineare Federelement 38b speichert eine Kraft, die von dem Tragarm 16b bei der Bewegung des Tragarms 16b in die Bewegungsrichtung 68b ausgeübt wird. Das Federelement 38b ist als eine Spiralfeder ausgebildet. Das lineare Federelement 38b speichert eine translatorische bzw. lineare Kraft. Das Federelement 38b bewegt mit der translatorischen Kraft das Betätigungselement 26b linear. Zur Führung des Betätigungselements 26b weist die Energiespeichereinheit 18b eine Führungsschiene 86b auf. Das Betätigungselement 26b kann entlang der Führungsschiene 86b bewegt werden. Die Führungsschiene 86b ist parallel zu der Befestigungsfläche 62b der Hauptgelenkeinheit 58b angeordnet.

Zur Umwandlung der in der Energiespeichereinheit 18b gespeicherten Kraft in ein Drehmoment zur Betätigung des Tragarms 16b weist die Sitzanbauvorrichtung 10b eine Kraftumsetzungseinheit 40b auf. Die Kraftumsetzungseinheit 40b koppelt das Betätigungselement 26b der Energiespeichereinheit 18b und den Tragarm 16b bewegungstechnisch miteinander. In diesem Ausführungsbeispiel weist die Kraftumsetzungseinheit 40b ein Umlenkgetriebe 42b auf.

Das Umlenkgetriebe 42b der Kraftumsetzungseinheit 40b ist teilweise einstückig mit dem Betätigungselement 26b ausgebildet. Die Kraftumsetzungseinheit 40b ist als ein Zahnstangengetriebe ausgebildet. Das Umlenkgetriebe 42b der Kraftumsetzungseinheit 40b umfasst ein Tragarmbetätigungselement 92b. Das Tragarmbetätigungselement 92b ist als ein Zahnradelement der als Zahnstangengetriebe ausgebildeten Kraftumsetzungseinheit 40b ausgebildet. Das Tragarmbetätigungselement 92b weist eine Verzahnung auf. Die Verzahnung des Tragarmbetätigungselements 92b weist vier Zähne auf. Das Tragarmbetätigungselement 92b ist mittels zweier Schrauben 110b fest mit der Hauptgelenkeinheit 58b und damit mit dem Tragarm 16b verbunden. Die als Zahnstangengetriebe ausgebildete Kraftumsetzungseinheit 40b weist weiter ein Zahnstangenelement auf. Das Zahnstangenelement ist einstückig mit dem Betätigungselement 26b der Energiespeichereinheit 18b ausgebildet. Das Betätigungselement 26b weist eine, zu der Verzahnung des Tragarmbetätigungselements 92b korrespondierende Verzahnung auf. Die Verzahnung des Betätigungselements 26b weist fünf Zähne auf, wobei ein Zahn als ein Halbzahn mit verkürztem Zahnkopf ausgebildet ist. Die Verzahnung des Betätigungselements 26b greift in die Verzahnung des Tragarmbetätigungselements 92b ein. Das Tragarmbetätigungselement 92b kämmt mit dem Betätigungselement 26b.

Um die Energiespeichereinheit 18b unabhängig von dem Tragarm 16b in dem gespannten Zustand zu halten, weist die Sitzanbauvorrichtung 10b eine Fixiereinheit 24b auf. Die Fixiereinheit 24b weist ein ortsfest angeordnetes Gehäuse 28b auf. Die Fixiereinheit 24b verbindet das Betätigungselement 26b direkt mit dem Gehäuse 28b. Das Gehäuse 28b der Fixiereinheit 24b ist einstückig mit dem Hauptgelenkgehäuse 60b ausgebildet.

Die Fixiereinheit 24b fixiert indirekt den Tragarm 16b über die Fixierung des Betätigungselements 26b der Energiespeichereinheit 18b in der Verstaustellung 20b. In Bezug auf die in der Energiespeichereinheit 18b gespeicherte Kraft ist der Tragarm 16b in der Verstaustellung 20b kraftlos. Die Fixiereinheit 24b weist zwei Rastelemente 30b, 94b auf. Das Rastelement 30b ist als ein gemeinsames Rasteingriffselement und das Rastelement 94b als ein gemeinsames Rastaufnahmeelement ausgebildet. Das als gemeinsames Rasteingriffselement ausgebildete Rastelement 30b verrastet zusammen den Tragarm 16b und die Energiespeichereinheit 18b. Das Rastelement 30b verrastet den Tragarm 16b über die Kraftumsetzungseinheit 40b. Die Fixiereinheit 24b verrastet mittels des Rastelements 30b direkt das Betätigungselement 26b der Energiespeichereinheit 18b und indirekt den Tragarm 16b. Das Rastelement verrastet das Betätigungselement 26b unabhängig vom Tragarm 16b in der Verstaustellung 20b.

Die Rastelemente 30b, 94b der Fixiereinheit 24b verrasten das Betätigungselement 26b der Energiespeichereinheit 18b und damit die Energiespeichereinheit 18b direkt. Das Rastelement 30b ist bezüglich des ortsfest angeordneten Gehäuses 28b verdrehbar angeordnet. Das Rastelement 30b weist eine Drehachse auf. Die Drehachse des Rastelements 30b ist parallel zu der Befestigungsfläche 62b angeordnet. Das Rastelement 94b ist mit einer Schraube 112b fest mit dem Betätigungselement 26b verbunden. Zur formschlüssigen Verbindung greift das Rastelement 94b in das Rastelement 30b. Das Rastelement 30b hält das Betätigungselement 26b und über die Kraftumsetzungseinheit 40b den Tragarm 16b in der Verstaustellung 20b fest. Das Umlenkgetriebe 42b verbindet das Rastelement 30b formschlüssig mit dem Tragarm 16b. Zum sicheren Greifen des Rastelements 94b in das Rastelement 30b weist die Fixiereinheit 24b ein Federelement 114b auf. Das Federelement 114b ist als eine Spiralfeder ausgebildet. Das Federelement 114b übt eine Kraft aus, die das Rastelement 30b nach unten gegen das Rastelement 94b drückt.

Zur Betätigung der Fixiereinheit 24b, um gemeinsam die Verrastung des Tragarms 16b und die Verrastung des Betätigungselements 26b der Energiespeichereinheit 18b zu lösen, weist die Sitzanbauvorrichtung 10b eine Auslöseeinheit 44b auf. Die Auslöseeinheit 44b löst die Bewegung des Tragarms 16b in die Entriegelungsstellung 22b aus. Zum Lösen der Verrastung des Betätigungselements 26b und damit zum Lösen der Verrastung des Tragarms 16b in der Verstaustellung 20b weist die Auslöseeinheit 44b einen Stab 108b auf. Der Stab 108b liegt mit einem Ende an dem Rastelement 30b. Ein anderes Ende des Stabs 108b liegt an einem Auslöseknopf 106b der Auslöseeinheit 44b an. Damit der Stab 108b sicher an dem Auslöseknopf 106b anliegt, weist die Auslöseeinheit 44b ein Federelement 116b auf. Das Federelement 116b ist als eine Spiralfeder ausgebildet. Das Federelement 116b ist zwischen einer Erhebung des Stabs 108b und einem, mit dem Drehgelenk der Hauptgelenkeinheit 58b fest verbundenen Abstützelement 118b angeordnet. Das Federelement 116b bewegt den Stab 108b in eine Ausgangsstellung, in der der Stab 108b an dem Auslöseknopf 106b anliegt und keine Kraft auf das Rastelement 30b ausübt.

Der Auslöseknopf 106b ist in einer Ausnehmung in dem Tragarmstück 70b angeordnet. Der Auslöseknopf 106b ist bezüglich eines Gehäuses des Tragarmstücks 70b verdrehbar in der Ausnehmung angeordnet. Der Auslöseknopf 106b weist eine Drehachse auf. Die Drehachse ist parallel zu der Hauptgelenkachse angeordnet. Um den Auslöseknopf 106b nach einem Betätigen in eine Ausgangstellung zu bewegen, weist die Auslöseeinheit 44b ein weiteres Federelement 120b auf. Das Federelement 120b ist als eine Spiralfeder ausgebildet. Durch Betätigen des Auslöseknopfs 106b drückt der Stab 108b auf das Rastelement 30b, wodurch sich das Rastelement 30b verdreht und der Formschluss mit dem Betätigungselement 26b gelöst wird.

Die Fixiereinheit 24b, die Energiespeichereinheit 18b, die Auslöseeinheit 44b und die Kraftumsetzungseinheit 40b sind in dem Hauptgelenkgehäuse 60b und damit in dem Gehäuse 28b integriert. Außer dem Auslöseknopf 106b sind die Elemente der Fixiereinheit 24b, der Energiespeichereinheit 18b, der Auslöseeinheit 44b und der Kraftumsetzungseinheit 40b nicht sichtbar.

In einem Bedienablauf der Sitzanbauvorrichtung 10b, in dem der Benutzer, ausgehend von der Verstaustellung 20b, die Nutzstellung 52b einstellen will, betätigt der Benutzer den Auslöseknopf 106b der Auslöseeinheit 44b. Durch Betätigen des Auslöseknopfs 106b löst die Auslöseeinheit 44b die Verrastung des Betätigungselements 26b und damit gleichzeitig über die Kraftumsetzungseinheit 40b die Verrastung des Tragarms 16b. Durch die bis dahin im gespannten Zustand gehaltene Energiespeichereinheit 18b wird nach dem Lösen der Verrastung des Betätigungselements 26b die in der Energiespeichereinheit 18b gespeicherte translatorische Kraft freigesetzt, wodurch eine lineare Bewegung des Betätigungselements 26b resultiert. Die Kraftumsetzungseinheit 40b wandelt die translatorische Kraft bzw. die lineare Bewegung des Betätigungselements 26b der Energiespeichereinheit 18b in ein Drehmoment bzw. in eine rotatorische Bewegung des Tragarms 16b um. Durch die formschlüssige Verbindung des Betätigungselements 26b mit dem Drehgelenk der Hauptgelenkeinheit 58b aufgrund des Umlenkgetriebes 42b der Kraftumsetzungseinheit 40b bewegt das Betätigungselement 26b den Tragarm 16b in die Bewegungsrichtung 66b entlang dem im Wesentlichen reibungsfreien Teilschwenkbereich 78b in die Entriegelungsstellung 22b. Die Energiespeichereinheit 18b bzw. das Federelement 38b der Energiespeichereinheit 18b befindet sich nun in einem entspannten bzw. in einem kraftlosen Zustand. Bei fehlender äußerer Krafteinwirkung durch den Benutzer hält die Energiespeichereinheit 18b den Tragarm 16b in der Entriegelungsstellung 22b fest. Die in der Energiespeichereinheit 18b gespeicherte Kraft wirkt also auf den Tragarm 16b erst nach dem Lösen der Verrastung des Betätigungselements 26b. Ausgehend von der Entriegelungsstellung 22b stellt der Benutzer durch Bewegen des Tragarms 16b in die Bewegungsrichtung 66b entlang dem reibungsbehafteten Teilschwenkbereich 76b die gewünschte Nutzstellung 52b ein. Dabei greift die Verzahnung des Tragarmbetätigungselements 92b nicht mehr in die Verzahnung des Betätigungselements 26b. Die Reibeinheit hält die gewünschte Nutzstellung 52b durch eine Reibkraft fest. Durch die Gelenke verstellt der Benutzer die Nutzstellung 52b des als Monitor ausgebildeten Gegenstands.

In einem Bedienablauf der Sitzanbauvorrichtung 10b, in dem der Benutzer, ausgehend von der Nutzstellung 52b, die Verstaustellung 20b einstellen will, bewegt der Benutzer den Tragarm 16b in die Bewegungsrichtung 68b entlang dem reibungsbehafteten Teilschwenkbereich 76b in die Entriegelungsstellung 22b. Die Energiespeichereinheit 18b hält bei fehlender äußerer Krafteinwirkung durch den Benutzer den Tragarm 16b in der Entriegelungsstellung 22b fest. In der Entriegelungsstellung 22b greift die Verzahnung des Tragarmbetätigungselements 92b wieder teilweise in die Verzahnung des Betätigungselements 26b der Energiespeichereinheit 18b. Bis dahin befindet sich die Energiespeichereinheit 18b in dem entspannten bzw. in dem kraftlosen Zustand. Ausgehend von der Entriegelungsstellung 22b bewegt der Benutzer den Tragarm 16b in die Bewegungsrichtung 68b entlang dem im Wesentlichen reibungsfreien Teilschwenkbereich 78b in die Verstaustellung 20b. Beim Bewegen des Tragarms 16b in die Bewegungsrichtung 68b entlang dem im Wesentlichen reibungsfreien Teilschwenkbereich 78b überwindet der Benutzer lediglich die Kraft des Federelements 38b und spannt die bis dahin entspannte Energiespeichereinheit 18b bzw. das bis dahin entspannte Federelement 38b der Energiespeichereinheit 18b. Durch das Bewegen des Tragarms 16b in die Bewegungsrichtung 68b entlang dem im Wesentlichen reibungsfreien Teilschwenkbereich 78b wandelt die Kraftumsetzungseinheit 40b das von Benutzer aufgebrachte Drehmoment in eine translatorische Kraft. Diese translatorische Kraft speichert das Federelement 38b. Diese translatorische Kraft ist die Kraft, die den Tragarm 16b beim Betätigen des Auslöseknopfs 106b in die Entriegelungsstellung 22b bewegt. Die Verstaustellung 20b ist beim Einrasten des Rastelements 30b eingestellt. Beim Einrasten des Rastelements 30b entkoppelt das Rastelement 30b die translatorische Kraft der Energiespeichereinheit 18b von dem Tragarm 16b. Das Rastelement 30b leitet die Kraft der gespannten Energiespeichereinheit 18b auf das ortsfest angeordnete Hauptgelenkgehäuse 60b bzw. auf das Gehäuse 28b der Fixiereinheit 24b. Die Fixiereinheit 24b hält direkt den gespannten Zustand der Energiespeichereinheit 18b und indirekt über das Umlenkgetriebe 42b der Kraftumsetzungseinheit 40b gleichzeitig den Tragarm 16b in der Verstaustellung 20b. Die durch den gespannten Zustand resultierende translatorische Kraft der Energiespeichereinheit 18b ist von dem Tragarm 16b entkoppelt bzw. getrennt. Der Tragarm 16b ist in einem verrasteten Zustand in Bezug auf die Kraft der Energiespeichereinheit 18b kraftlos.

**Bezugszeichen**

| | | | |
|---|---|---|---|
| 10 | Sitzanbauvorrichtung | 62 | Befestigungsfläche |
| 12 | Gegenstand | 64 | Schwenkbereich |
| 14 | Sitz | 66 | Bewegungsrichtung |
| 16 | Tragarm | 68 | Bewegungsrichtung |
| 18 | Energiespeichereinheit | 70 | Tragarmstück |
| 20 | Verstaustellung | 72 | Zwischenstück |
| 22 | Entriegelungsstellung | 74 | Geräteaufnahmestück |
| 24 | Fixiereinheit | 76 | reibungsbehafteter Teilschwenkbereich |
| 26 | Betätigungselement | | |
| 28 | Gehäuse | 78 | reibungsfreier Teilschwenkbereich |
| 30 | Rastelement | 80 | Montagemodul |
| 32 | Rastelement | 82 | Führungselement |
| 34 | Rastauslöseeinheit | 84 | Schraube |
| 36 | Kopplungselement | 86 | Führungsschiene |
| 38 | Federelement | 88 | Ausnehmung |
| 40 | Kraftumsetzungseinheit | 90 | Ausnehmung |
| 42 | Umlenkgetriebe | 92 | Tragarmbetätigungselement |
| 44 | Auslöseeinheit | 94 | Rastelement |
| 46 | Armlehne | 96 | Rastelement |
| 48 | Sitzfuß | 98 | Federelement |
| 50 | Boden | 100 | Federelement |
| 52 | Nutzstellung | 102 | einfaches Ende |
| 54 | Bildschirmebene | 104 | doppeltes Ende |
| 56 | Rückenlehne | 106 | Auslöseknopf |
| 58 | Hauptgelenkeinheit | 108 | Stab |
| 60 | Hauptgelenkgehäuse | 110 | Schraube |
| 112 | Schraube | | |
| 114 | Federelement | | |
| 116 | Federelement | | |
| 118 | Abstützelement | | |
| 120 | Federelement | | |

## Patentansprüche

1. Sitzanbauvorrichtung, insbesondere Fluggastsitzanbauvorrichtung, zur beweglichen Befestigung eines Gegenstands (12a) an einem Sitz (14a; 14b), mit einem Tragarm (16a; 16b) und zumindest einer mechanischen Energiespeichereinheit (18a; 18b), die dazu vorgesehen ist, in einem gespannten Zustand eine Kraft zu speichern, die zur Bewegung des Tragarms (16a; 16b) von einer Verstaustellung (20a; 20b) in eine Entriegelungsstellung (22a; 22b) vorgesehen ist, sowie mit zumindest einer Fixiereinheit (24a; 24b), die dazu vorgesehen ist, die Energiespeichereinheit (18a; 18b) unabhängig von dem Tragarm (16a; 16b) in dem gespannten Zustand zu halten, wobei die Energiespeichereinheit (18a; 18b) zumindest ein Betätigungselement (26a; 26b) und die Fixiereinheit (24a; 24b) ein ortsfest angeordnetes Gehäuse (28a; 28b) aufweist und dazu vorgesehen ist, das Betätigungselement (26a; 26b) direkt mit dem Gehäuse (28a; 28b) zu verbinden, wobei die Fixiereinheit (24a; 24b) zumindest ein Rastelement (30a; 30b) aufweist, das dazu vorgesehen ist, zumindest das Betätigungselement (26a; 26b) der Energiespeichereinheit (18a; 18b) direkt zu verrasten, und wobei die Fixiereinheit (24a) zumindest ein weiteres Rastelement (32a), das dazu vorgesehen ist, den Tragarm (16a) direkt zu verrasten, sowie eine Rastauslöseeinheit (34a) aufweist, die dazu vorgesehen ist, die Rastelemente (30a, 32a) zeitlich nacheinander zu lösen, **dadurch gekennzeichnet, dass** die Rastauslöseeinheit (34a) zumindest ein Kopplungselement (36a) aufweist, das dazu vorgesehen ist, die zumindest zwei Rastelemente (30a, 32a) bewegungstechnisch miteinander zu koppeln.

2. Sitzanbauvorrichtung nach Anspruch 1, **dadurch gekennzeichnet, dass** die Fixiereinheit (24a; 24b) dazu vorgesehen ist, den Tragarm (16a; 16b) in der Verstaustellung (20a; 20b) zu fixieren.

3. Sitzanbauvorrichtung nach einem der vorhergehenden Ansprüche, **dadurch gekennzeichnet, dass** der Tragarm (16a; 16b) in der Verstaustellung (20a; 20b) in Bezug auf die in der Energiespeichereinheit (18a; 18b) gespeicherte Kraft kraftlos ist.

4. Sitzanbauvorrichtung nach einem der vorhergehenden Ansprüche, **dadurch gekennzeichnet, dass** die Energiespeichereinheit (18a; 18b) zumindest ein lineares Federelement (38a; 38b) aufweist, das dazu vorgesehen ist, eine translatorische Kraft zu speichern.

5. Sitzanbauvorrichtung zumindest nach Anspruch 1, **gekennzeichnet durch** zumindest eine Kraftumsetzungseinheit (40a; 40b), die dazu vorgesehen ist, zumindest das Betätigungselement (26a; 26b) der Energiespeichereinheit (18a; 18b) mit zumindest einem Teil des Tragarms (16a; 16b) bewegungstechnisch miteinander zu koppeln.

6. Sitzanbauvorrichtung nach Anspruch 5, **dadurch gekennzeichnet, dass** die Kraftumsetzungseinheit (40a; 40b) dazu vorgesehen ist, die in der Energiespeichereinheit (18a; 18b) gespeicherte Kraft in ein Drehmoment zur Betätigung des Tragarms (16a; 16b) umzuwandeln.

7. Sitzanbauvorrichtung zumindest nach den Ansprüchen 1 und 5, **dadurch gekennzeichnet, dass** die Kraftumsetzungseinheit (40b) zumindest ein Umlenkgetriebe (42b) aufweist, das in zumindest einem Betriebszustand dazu vorgesehen ist, den Tragarm (16b) mit dem Rastelement (30b) formschlüssig zu verbinden.

8. Sitzanbauvorrichtung zumindest nach Anspruch 5, **dadurch gekennzeichnet, dass** die Kraftumsetzungseinheit (40b) als ein Zahnstangengetriebe ausgebildet ist.

9. Sitzanbauvorrichtung nach einem der vorhergehenden Ansprüche, **gekennzeichnet durch** eine Auslöseeinheit (44a; 44b), die dazu vorgesehen ist, zum gemeinsamen Lösen der Fixierung des Tragarms (16a; 16b) und der Fixierung der Energiespeichereinheit (18a; 18b) die Fixiereinheit (24a; 24b) zu betätigen.

## Claims

1. Seat add-on device, in particular air passenger seat add-on device, for movably fixating an object (12a) to a seat (14a; 14b), with a support arm (16a; 16b) and with at least one mechanical energy storage unit (18a; 18b), which is configured to store, in a tensioned state, a force provided for moving the support arm (16a; 16b) from a stowage position (20a; 20b) into an unlocked position (22a; 22b), and with at least one fixation unit (24a; 24b). which is provided to hold the energy storage unit (18a; 18b) in the tensioned state, independently from the support arm (16a; 16b), wherein the energy storage unit (18a; 18b) comprises at least one actuation element (26a; 26b) and the fixation unit (24a; 24b) comprises a stationarily arranged housing (28a; 28b) and is provided to directly connect the actuation element (26a; 26b) to the housing (28a; 28b), wherein the fixation unit (24a; 24b) comprises at least one latching element (30a; 30b), which is configured to directly latch at least the actuation element (26a; 26b) of the energy storage unit (18a; 18b), and wherein the fixation unit (24a) comprises at least one further latching element (32a), which is configured to directly latch the support arm (16a) and comprises a latch-release unit (34a), which is configured to release the latching elements (30a, 32a) temporally one after the other one, **characterised in that** the latch-release unit (34a) comprises at least one coupling element (36a), which is provided to couple the at least two latching elements (30a, 32a) to each other movement-technically.

2. Seat add-on device according to claim 1, **characterised in that** the fixation unit (24a; 24b) is provided to fixate the support arm (16a; 16b) in the stowage position (20a; 20b).

3. Seat add-on device according to one of the preceding claims, **characterised in that** the support arm (16a; 16b) is in the stowage position (20a; 20b) powerless as regards the force stored in the energy storage unit (18a; 18b).

4. Seat add-on device according to one of the preceding claims, **characterised in that** the energy storage unit (18a; 18b) comprises at least one linear spring element (38a; 38b) which is provided to store a translational force.

5. Seat add-on device at least according to claim 1, **characterised by** at least one force-conversion unit (40a; 40b) which is configured to couple at least the actuation element (26a; 26b) of the energy storage unit (18a; 18b) with at least a portion of the support arm (16a; 16b) movement-technically.

6. Seat add-on device according to claim 5, **characterised in that** the energy conversion unit (40a; 40b) is configured to convert the force stored in the energy storage unit (18a; 18b) into a torque for actuating the support arm (16a; 16b).

7. Seat add-on device at least according to claims 1 and 5, **characterised in that** the energy conversion unit (40b) features at least one deflection gear (42b), which is in at least one operating state provided to connect the support arm (16b) to the latch element (30b) in a form-fit fashion.

8. Seat add-on device at least according to claim 5, **characterised in that** the energy conversion unit (40b) is embodied as a rack-and-pinion gear.

9. Seat add-on device according to one of the preceding claims, **characterised by** a release unit (44a; 44b), which is provided to actuate the fixation unit (24a; 24b) for together releasing the fixation of the support arm (16a; 16b) and the fixation of the energy storage unit (18a; 18b).

## Revendications

1. Dispositif annexe de siège, notamment dispositif annexe de siège passager d'aéronef, pour une fixation mobile d'un objet (12a) à un siège (14a ; 14b), avec un bras porteur (16a ; 16b) et avec au moins une unité d'accumulation d'énergie (18a ; 18b) mécanique, laquelle est prévue à accumuler, dans un état tendu, une force prévue à mouvoir le bras porteur (16a ; 16b) d'une position de rangement (20a ; 20b) dans une position de déverrouillage (22a ; 22b), et avec au moins une unité à fixation (24a ; 24b), laquelle est prévue à tenir l'unité d'accumulation d'énergie (18a ; 18b) en état tendu indépendamment du bras porteur (16a ; 16b), l'unité d'accumulation d'énergie (18a ; 18b) comportant au moins un élément d'actuation (26a ; 26b) et l'unité à fixation (24a ; 24b) comportant un boîtier (28a ; 28b) disposé stationnairement et étant prévue à directement raccorder l'élément d'actuation (26a ; 26b) au boîtier (28a ; 28b),
l'unité à fixation (24a ; 24b) comportant au moins un élément d'encliquetage (30a ; 30b), lequel est prévu à directement encliqueter au moins l'élément d'actuation (26a ; 26b) de l'unité d'accumulation d'énergie (18a ; 18b),
et l'unité à fixation (24a) comportant au moins un autre élément d'encliquetage (32a), lequel est prévu à directement encliqueter le bras porteur (16a), et comportant une unité à relâchement d'encliquetage (34a), laquelle est prévue à temporellement relâcher les éléments d'encliquetage (30a, 32a) l'un après l'autre, **caractérisé en ce que**
l'unité a relâchement d'encliquetage (34a) comporte au moins un élément d'accrochage (36a) prévu à accrocher les au moins deux éléments d'encliquetage (30a, 32a) l'un avec l'autre en ce qui concerne la technologie de mouvement.

2. Dispositif annexe de siège selon la revendication 1, **caractérisé en ce que** l'unité à fixation (24a ; 24b) est prévue à fixer le bras porteur (16a ; 16b) dans la position de rangement (20a ; 20b).

3. Dispositif annexe de siège selon l'une quelconque des revendications précédentes, **caractérisé en ce que,** dans la position de rangement (20a ; 20b) le bras porteur (16a ; 16b) est sans force quant à la force accumulée dans l'unité d'accumulation d'énergie (18a ; 18b).

4. Dispositif annexe de siège selon l'une quelconque des revendications précédentes, **caractérisé en ce que** l'unité d'accumulation d'énergie (18a ; 18b) comprend au moins un élément à ressort linéaire (38a ; 38b) prévu à accumuler une force translationnelle.

5. Dispositif annexe de siège au moins selon la revendication 1, **caractérisé par** au moins une unité à conversion de force (40a ; 40b) prévue à accrocher, en ce qui concerne la technologie de mouvement, au moins l'élément d'actuation (26a ; 26b) de l'unité d'accumulation d'énergie (18a ; 18b) avec au moins une part du bras porteur (16a ; 16b).

6. Dispositif annexe de siège selon la revendication 5, **caractérisé en ce que** l'unité à conversion de force (40a ; 40b) est prévue à convertir la force accumulée dans l'unité d'accumulation d'énergie (18a ; 18b) en un torque pour l'actuation du bras porteur (16a ; 16b).

7. Dispositif annexe de siège au moins selon les revendications 1 et 5, **caractérisé en ce que** l'unité à conversion de force (40b) comporte au moins un entraînement defléchissant (42b) prévu, dans au moins un état opératif, à raccorder le bras porteur (16b) avec l'élément d'encliquetage (30b) à engagement positif.

8. Dispositif annexe de siège au moins selon la revendication 5, **caractérisé en ce que** l'unité à conversion de force (40b) est implémentée comme entraînement à arbre dentée.

9. Dispositif annexe de siège selon l'une quelconque des revendications précédentes, **caractérisé par** une unité déclencheur (44a ; 44b) prévue à actionner l'unité à fixation (24a ; 24b) pour le but de conjointement relâcher la fixation du bras porteur (16a ; 16b) et la fixation de l'unité d'accumulation d'énergie (18a ; 18b).
